# EUROPEAN PATENT APPLICATION

(11) **EP 2 670 118 A1**
(43) Date of publication of application: **04.12.2013**
(21) Application number: 12004106.6
(22) Date of filing: 28.05.2012
(51) Int. Cl.: H04M 1/725

(54) **Improved status notification for a mobile communications terminal**

(71) Applicant: Doro AB, 226 43 Lund (SE)
(72) Inventor: Yasar Yucel, Mr., 247 32 Södra Sandby (SE); Cullin Peter, Mr., 245 44 Staffanstorp (SE)
(74) Representative: Hård, John Martin

(57) **Abstract**

A mobile communications terminal (200) comprising a memory (240), a display (120, 220) and a controller (210). The controller (210) is configured to display at least one smaller icon (510) for indicating a status and to receive a selection of a status menu option. The apparatus is further configured to display an enlarged icon (550) being an enlarged version of a corresponding smaller icon (510) for enabling a cognitive link between the smaller icon and a related status in response to receiving the selection.

## Description

### TECHNICAL FIELD

This application relates to a method, a mobile communications terminal and a computer-readable storage medium for an improved user interface, and in particular to a method, a mobile communications terminal and a computer-readable storage medium for an improved notification of a status.

### BACKGROUND

In today's society where mobile communications terminals are becoming more and more advanced the amount of information that is presented to a user is also growing. A user is made aware of the operational status of the mobile communications terminal, by displaying an indication of operational features such as the current battery level, the current ringing tone setting, the signal strength level, missed calls, incoming messages as well as other operational features.

This is not a problem that solely occurs in modem mobile communications terminals. The same problem also exists in older mobile communications terminals, where the amount of information to display may not be as great, but where the graphical capabilities of the older mobile communications terminals restrict the manner of displaying the information. For example, the icons can not be displayed in as much detail.

The amount of information that is to be displayed and the relatively small display sizes necessitate that these notifications are displayed as small icons indicating the status of the operational features. This makes it difficult for a technically inexperienced user to differentiate between the meanings of the different icons. In fact, some users may even have difficulties differentiating between different icons. One example being the similarity between the icon for an incoming SMS (short Message Service) message and the icon for an incoming email message that can be difficult to tell apart. Various techniques exist for providing additional information to a user.

One example of such a technique is that by highlighting an icon an explanation is displayed. This technique suffers from at least the drawbacks that it is not intuitive and some users may have difficulties in selecting the correct icon. The technique also requires the use of a touchscreen, something many inexperienced users are biased to shy away from due to the mental and cognitive effort to adapt to and learn a new technique. This is relatively common among the senior population.

Another example of such a technique is that by performing a pull down of the status bar on which the status icons are displayed, a more detailed notification is displayed, such as in the Android™ based mobile communications terminal Sony® Xperia® Arc-S. This technique suffers from at least the drawbacks that it is reliant on a touch screen and also that it does not provide a cognitive link between the displayed icon and the detailed notification. It is furthermore not intuitive to an inexperienced user how to activate the detailed view.

Another example of such a technique is to provide a dedicated key for accessing a settings menu. Through the settings menu a relevant status option (such as Status Messages, Network Statistics, Firmware Versions to name a few) may be selected to display information relevant to that option. One such technique is implemented in the Cisco Unified OP Phone models 7960G and 7940G. This technique suffers from at least the drawbacks that it requires a dedicated key and that the grouping of the statuses are arranged to suit technically experienced users. It also does not provide a cognitive link between the indication and the information. Furthermore, a user looking for specific information will have to traverse a menu system through many levels to reach the relevant information. The information provided along the path will confuse and bewilder an inexperienced user.

Inexperienced users such as the elder often have a strong bias against adapting to new technologies and as such require that a product is highly intuitive to use. This provides for may areas in which to provide solutions for simplifying existing user interface concepts so that they suit the technically inexperienced seniors.

There is thus a need for an improved manner of notifying a user of a status and solving the longstanding problems as outlined above.

It should be noted that in the technical area of mobile communications terminals there has in the last few years been a change of user interface paradigms since the introduction of the touch screens. The touch interface is based on a fundamentally different concept and many inexperienced users find it difficult to adapt to this new way of thinking about, handling and structuring a user interface. Those users that are unable to adopt the new concept will effectively be prevented from using many of the fantastic features that are now available for use even in mobile communications terminals, such as smartphones. The skilled person, always being interested in improving and developing his field, sometimes looses track of more traditional values and concepts. The result is often highly complex and fantastic features and products that bring great joy and usability to the broad community, whereas some users are left behind as being unable to adopt the swiftly emerging new technologies.

### SUMMARY

It is a further object of the teachings of this application to overcome the problems listed above by providing a mobile communications terminal comprising a memory, a display and a controller, wherein said controller is configured to display at least one smaller icon for indicating a status, receive a selection of a status menu option and in response thereto display an enlarged icon being an enlarged version of a corresponding smaller icon for enabling a cognitive link between the smaller icon and a related status.

It is a further object of the teachings of this application to overcome the problems listed above by providing a method for use in a mobile communications terminal comprising a memory, a display and a controller, said method comprising displaying at least one smaller icon for indicating a status, receiving a selection of a status menu option and in response thereto displaying an enlarged icon being an enlarged version of a corresponding smaller icon for enabling a cognitive link between the smaller icon and a related status.

It is a further object of the teachings of this application to overcome the problems listed above by providing a computer readable medium comprising instructions that when loaded into and executed by a controller, such as a processor, cause the execution of a method according to herein.

The inventors of the present application have realized, after inventive and insightful reasoning, that by providing an enlarged view of the smaller icon and without displaying other unrelated information that may distract the user, it is easier for a user to form a cognitive link or association between the smaller icon and the related function or status.

Other features and advantages of the disclosed embodiments will appear from the attached detailed disclosure.

### BRIEF DESCRIPTION OF DRAWINGS

The invention will be described in further detail under reference to the accompanying drawings in which:
Figure 1 shows a schematic view of a mobile communications terminal according to one embodiment of the teachings of this application;
Figure 2 shows a schematic view of the general structure of a mobile communications terminal according to one embodiment of the teachings of this application;
Figure 3 shows a schematic view of a telecommunications network comprising a mobile communications terminal according to one embodiment of the teachings of this application;
Figure 4 shows a schematic view of a computer-readable medium according to one embodiment of the teachings of this application;
Figures 5A and 5B each shows a schematic view of a mobile communications terminal according to one embodiment of the teachings of this application;
Figures 6A, 6B and 6C each shows a view a mobile communications terminal displaying a status notification according to an example of the teachings of this application; and
Figure 7 shows a flow chart for a general method according to an embodiment of the teachings of this application.

### DETAILED DESCRIPTION

The disclosed embodiments will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout.

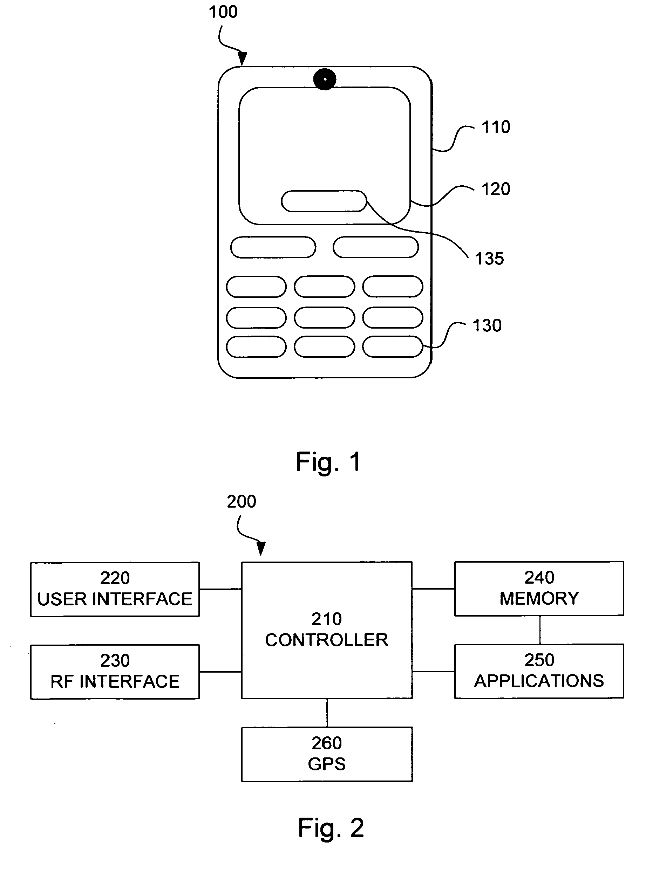

Figure 1 shows a schematic overview of a mobile communications terminal 100 adapted according to the teachings herein. In the embodiment shown the mobile communications terminal is a mobile phone 100. In other embodiments the mobile communications terminal 100 is a personal digital assistant, a media player, a location finding device or any hand-held device capable of communicating with other devices.

The mobile phone 100 comprises a housing 110 in which a display 120 is arranged. In one embodiment the display 120 is a non-touch display. In other embodiments the display 120 is a touch display. Furthermore, the mobile phone 100 comprises eleven keys 130. In this embodiment there are two softkeys and 9 other keys, but any number of keys, including none, is possible and depends on the design of the mobile phone 100. In one embodiment the mobile phone 100 is configured to display and operate a virtual key 135 on the touch display 120. It should be noted that the number of virtual keys 135 are dependent on the design of the mobile phone 100 and an application that is executed on the mobile phone 100. In one embodiment the communications terminal 100 comprises an ITU-T keypad or a QWERTY (or equivalent) keypad in addition to or as an alternative to a touch-sensitive display. In an embodiment where the keypad is an alternative to a touch-sensitive display, the display 120 is a non-touch-sensitive display.

Figure 2 shows a schematic view of the general structure of a mobile communications terminal which may be a mobile phone 100 according to figure 1. The mobile communications terminal 200 comprises a controller 210 which is responsible for the overall operation of the mobile terminal and is preferably implemented by any commercially available CPU ("Central Processing Unit"), DSP ("digital signal processor") or any other electronic programmable logic device, or a combination of such processors and/or other electronic programmable logic device. The controller 210 may be implemented using instructions that enable hardware functionality, for example, by using executable computer program instructions in a general-purpose or special-purpose processor that may be stored on a computer readable storage medium (disk, memory etc) 240 to be executed by such a processor. The controller 210 is configured to read instructions from the memory 240 and execute these instructions to control the operation of the mobile communications terminal 100. The memory 240 may be implemented using any commonly known technology for computer-readable memories such as ROM, RAM, SRAM, DRAM, CMOS, FLASH, DDR, EEPROM memory, flash memory, hard drive, optical storage or any combination thereof. The memory 240 is used for various purposes by the controller 210, one of them being for storing application data and various software modules in the mobile terminal.

The software modules include a real-time operating system, drivers for a user-machine interface 220, an application handler as well as various applications 250. The applications 250 are sets of instructions that when executed by the controller 210 control the operation of the mobile communications terminal 100. The applications 250 can include a messaging application for short messaging service (SMS), multimedia messaging service (MMS) and electronic mail, a media player application, as well as various other applications 250, such as applications for voice calling, video calling, web browsing, document reading and/or document editing, an instant messaging application, a phonebook application, a calendar application, a control panel application, one or more video games, a notepad application, location finding applications, etc. Furthermore, the mobile communications terminal 200 comprises a positioning device, such as a GPS (Global Positioning Systems) device 260.

The mobile communications terminal 200 further comprises a user interface 220, which in the mobile phone 100 of figure 1 is comprised of the display 120, the keys 130, 135, a microphone and a loudspeaker. The user interface (UI) 220 also includes one or more hardware controllers, which together with the user interface drivers cooperate with the display 120, keypad 130, as well as various other I/O devices such as vibrator, ringtone generator, LED indicator, etc. As is commonly known, the user may operate the mobile terminal through the man-machine interface thus formed.

The mobile communications terminal 200 further comprises a radio frequency interface 230, which is adapted to allow the mobile communications terminal to communicate with other communications terminals in a radio frequency band through the use of different radio frequency technologies. Examples of such technologies are W-CDMA, GSM, UTRAN, LTE and NMT to name a few. The controller 210 is configured to operably execute the applications 250, such as the voice call and message handling applications, through the RF interface 230 and software stored in the memory 240. The software includes various modules, protocol stacks, drivers, etc. to provide communication services (such as transport, network and connectivity) for the RF interface 230, and optionally a Bluetooth interface and/or an IrDA interface for local connectivity. The RF interface 230 comprises an internal or external antenna as well as appropriate radio circuitry for establishing and maintaining a wireless link to a base station. As is well known to a person skilled in the art, the radio circuitry comprises a series of analogue and digital electronic components, together forming a radio receiver and transmitter. These components include, for example, band pass filters, amplifiers, mixers, local oscillators, low pass filters, AD/DA converters, etc.

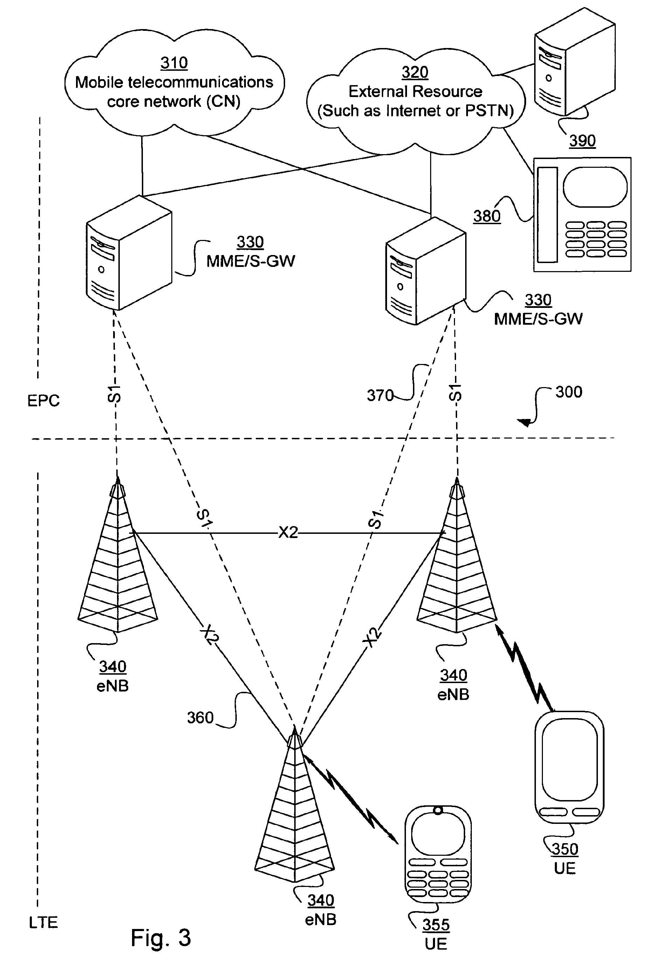

Figure 3 shows a schematic view of the general structure of a telecommunications system 300 according to the teachings herein. In the telecommunication system of figure 3, various telecommunications services such as cellular voice calls, www/wap browsing, cellular video calls, data calls, facsimile transmissions, music transmissions, still image transmissions, video transmissions, electronic message transmissions and electronic commerce may be performed between a mobile terminal 100, 200, 300, 350 according to the disclosed embodiments and other communications terminals, such as another mobile terminal 355 or a stationary telephone 380. The mobile terminals 350, 355 are connected to a mobile telecommunications network 310 through Radio Frequency links via base stations 340.

The telecommunications system 300 comprises at least one server 330. A server 330 has a data storage and a controller that may be implemented by any commercially available CPU ("Central Processing Unit"), DSP ("Digital Signal Processor") or any other electronic programmable logic device. In one embodiment such a server is a Mobility Management Entity (MME). In one embodiment such a server is a Gateway (GW). The servers 330 are configured to communicate with a mobile telecommunications core network (CN) 310 and/or an external resource 320 such as the internet or a Public Switched Telephone Network (PSTN). A PSTN 320 is configured to communicate with and establish communication between stationary or portable telephones 380. In one embodiment the external resource comprises or is configured to communicate with an external service provider 390. In one embodiment the servers 330 are configured to communicate with other communications terminals using a packet switched technology or protocol. In such an embodiment the servers 330 may make up an Evolved Packet Core (EPC) layer.

The servers 330 are configured to communicate with nodes, also referred to as base stations 340. In one embodiment the base station 340 is an evolved Node Base (eNB). A base station 340 is further configured to communicate with a server 330. In one embodiment the communication between a server 330 and a base station 340 is effected through a standard or protocol 370. In one embodiment the protocol is S1. A base station 340 is configured to communicate with another base station 340. In one embodiment the communication between a base station 340 and another base station 340 is effected through a standard or protocol 360. In one embodiment the protocol 360 is X2. A base station 340 is further configured to handle or service a cell. In one embodiment the at least one base stations 340 make up a Long Term Evolution (LTE) layer. In one embodiment the at least one base stations 340 make up an LTE Advanced layer.

In one embodiment the base station 340 is configured to communicate with a mobile communications terminal 350 (100) through a wireless radio frequency protocol.

In one embodiment the telecommunications system 300 is an Evolved Packet System (EPS) network. In one embodiment the telecommunications system is a system based on the 3GPP (3rd Generation Partnership Project) standard. In one embodiment the telecommunications system is a system based on the UMTS (Universal Mobile Telecommunications System) standard. In one embodiment the telecommunications system is a system based on a telecommunications standard such as GSM, D-AMPS, CDMA2000, FOMA or TD-SCDMA.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other devices. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

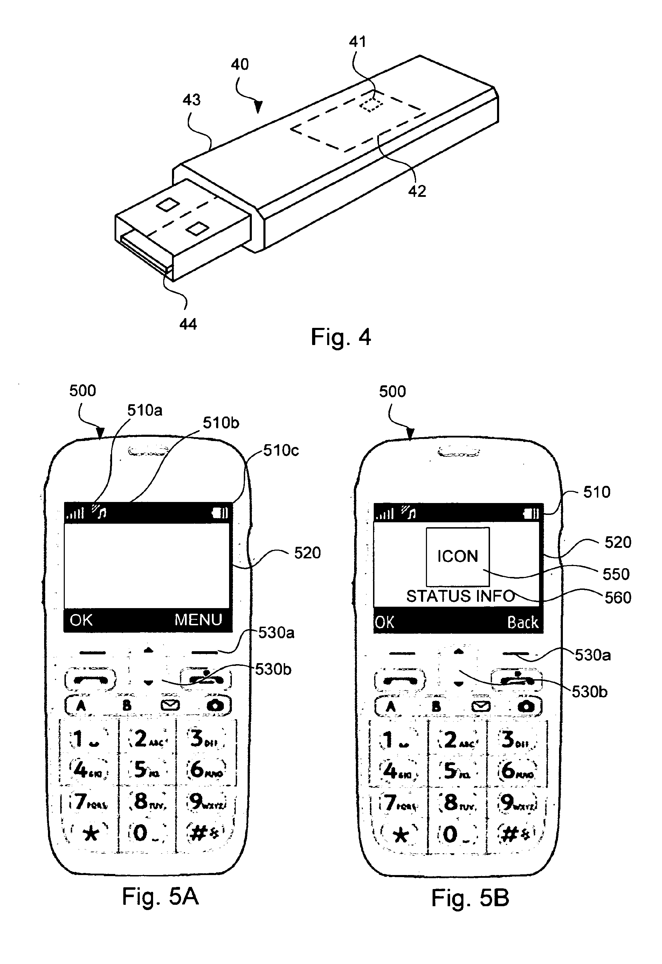

Figure 4 shows a schematic view of a computer-readable medium as described in the above. The computer-readable medium 40 is in this embodiment a memory stick, such as a Universal Serial Bus (USB) stick. The USB stick 40 comprises a housing 43 having an interface, such as a connector 44, and a memory chip 42. The memory chip 42 is a flash memory, that is, a non-volatile data storage that can be electrically erased and re-programmed. The memory chip 42 is programmed with instructions 41 that when loaded (possibly via the interface 44) into a controller, such as a processor, executes a method or procedure according to the embodiments disclosed above. The USB stick is arranged to be connected to and read by a reading device, such as a terminal according to figure 1, for loading the instructions into the controller. It should be noted that a computer-readable medium can also be other mediums such as compact discs, digital video discs, hard drives or other memory technologies commonly used. The instructions can also be downloaded from the computer-readable medium via a wireless interface to be loaded into the controller.

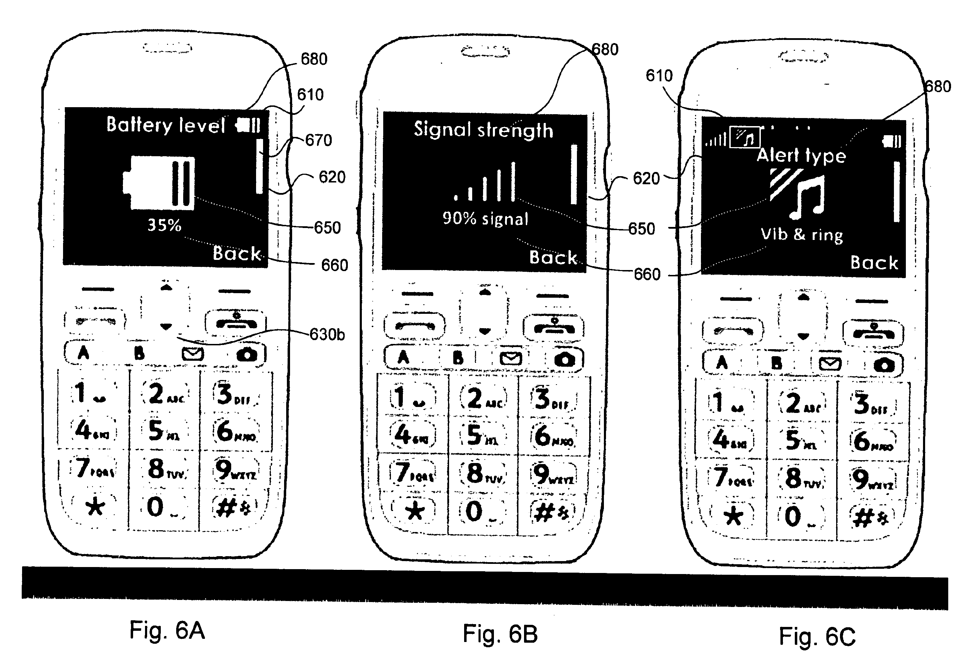

To enable a simple notification of a status to a user, a menu option is added to the main menu in the user interface of the mobile communications terminal 100, 200, 300, 350. Selecting this status menu option causes the mobile communications terminal to display a status notification having an enlarged version of the corresponding status icon along with information identifying the status and information relating to the current status. Examples of this will be shown with reference to figures 5A, 5B and 6A, 6B, and 6C.

Figure 5 shows an example of a mobile communications terminal according to herein. In this example embodiment the mobile communications terminal 500 is the mobile communications terminal 100 of figure 1 and the mobile communications terminal 200 of figure 2. In this embodiment the mobile communications terminal 500 is a mobile phone. The operation of the mobile communications terminal 500 may be effected through a controller (referenced 210 in figure 2). The mobile communications terminal 500 is configured to display at least one status icon 510a-c on the display 520. In the example of figure 5A three such icons are displayed, one for indicating a signal strength 510a, one for indicating an alert setting 510b and one for indicating a battery power level 510c. The status icons 510a-c are displayed in a small format to allow for displaying a plurality of icons 510a-c while not consuming a large portion of the available display area, thus allowing for presentation of other information and data, possibly relevant for applications being executed on the mobile communications terminal 500.

The mobile communications terminal 500 also has a number of keys, of which one is a selection key 530a and one is a navigation key 530b. In this example the selection key 530a is a soft key, and the navigation key 530b is an up/down scroll key. The selection key 530a and the navigation key 530b can be used to activate a menu and navigate through the menu to select a particular option. One possible listing of menu options is shown below.

| Menu | Alternative Menu |
|---|---|
| 1. Call register | Status |
| 2. Contacts | Call register |
| 3. Messages | Contacts |
| 4. Calendar | Messages |
| 5. Radio | Calendar |
| 6. Camera | Radio |
| 7. Gallery | Camera |
| 8. Status | Gallery |

It should be noted that the options and the order in the list may vary depending on the design and capability of the mobile communications terminal 500.

To allow a user to obtain a better view of the status indication in a manner that is easy to access and easy to understand for an inexperienced user, requiring no adaptation on the user's part, a status menu option (number 8 in the menu list above) is comprised in the menu. In this example the status menu option is positioned as number 8, but another position, for example number 1, is also possible as in the Alternative Menu shown above. In a cyclic list the last position (in this example position number 8) is easy to reach through one press on the up-portion of the navigation key 530b.

The mobile communications terminal 500 is configured to receive a selection of the status menu option and in response thereto display a screen image as in figure 5B. The mobile communications terminal 500 is configured to display an enlarged icon 550. The enlarged icon 550 corresponds to one of the displayed status icons 510a-c. The enlarged icon 550 is preferably an enlarged version of the corresponding status icon 510a-c. This allows for a cognitive link to be established between the small status icon 510a-c and the enlarged icon 550. A user seeing the enlarged icon 550 will be able to identify what the icon symbolizes more clearly and thereby be aided in concluding the function it represents. The user will also be able to associate the larger icon 550 with the smaller status icon 510a-c and in the future possibly be able to identify the smaller icon and remember its purpose, especially so if the smaller icon 510a-c is still being displayed, as in the example of figure 5B. By seeing both the smaller icon 510a-c and the enlarged icon 550 at the same time a user will be able to form a cognitive link and association between the smaller icon and the status it indicates or presents.

Furthermore, in one embodiment the mobile communications terminal 500 is configured to also display information 560 relating to the status of a function being represented by the icons 510a-c and 550. Such status information may be displayed as graphic data, or, as in the example of figure 5B, as textual information.

The mobile communications terminal 500 is also configured to, upon receiving a scroll command, possibly through the navigation key 530b, display a second enlarged icon (not shown) representing a second one of the smaller icons 510a-c and the function associated with the smaller icon.

The user will thus be able to easily, and in manner that is familiar to the user, retrieve information on a plurality of statuses, and also associate the smaller icons with the related functions.

In one embodiment the mobile communications terminal 500 is configured to highlight the small icon 510a-c corresponding to the enlarged icon 550. This highlighting can be achieved through an emphasis of the icon's lines, a shadowing effect, a color effect or through a line indicating a relationship being drawn from the enlarged icon 550 to the smaller icon 510a-c. Other highlighting can be achieved by diminishing the other non-corresponding small icons 510a-c, for example by displaying the non-corresponding icons 510a-c in a darker color, with lower brightness or not displaying them at all. This allows for a clearer link and association to be formed by the user, as the link is indicated more clearly or even directly on the display 520.

In one embodiment the mobile communications terminal 500 is configured to display only the enlarged icon 550. This to enable that the enlarged icon is displayed in as much detail as possible to enable a user to see the icon as clearly as possible to be able to distinctly remember it and later be able to identify it also in a smaller format. This allows the user to form a cognitive link between the status and the corresponding icon more easily.

In one embodiment the mobile communications terminal 500 is configured to display an explanatory indication of the purpose or function that the status relates to (see figure 6A for example). This explicitly indicates the meaning of the icon and allows the user to form a cognitive link more easily between the icon and the purpose or function that the icon relates to.

By collecting all available status notifications and their cognition-forming enlarged icons under one menu option, the advantageous effect, that a user is not required to traverse a complicated menu structure trying to find the status for each feature on its own, is achieved. Such a task would otherwise be regarded as highly complex by a technically inexperienced user.

Figures 6A-C each shows an example of a status notification for each a feature and the corresponding enlarged icon being displayed on a mobile communications terminal 600, such as the mobile communications terminals 100, 200, 300, 350 and 500 of figures 1, 2, 3 and 5.

In figure 6A the mobile communications terminal 600 is configured to display a status notification for the current battery level. An enlarged icon 650 representing a battery is displayed on the display 620. Below the enlarged icon a status notification 660 indicating the current status of the battery is displayed. In this example the battery is at 35 %. This is also indicated by the enlarged icon 650 showing only two bars. An explanatory indication in the form of a descriptive title 680 is also displayed which clearly identifies the purpose or function that the icon relates to. By displaying both graphical data and textual data representing the current status allows the user to associate the icon and the status more easily. In this example the corresponding smaller icon 610 is highlighted by being displayed at all.

A corresponding smaller icon 610, also representing the battery, is displayed. In this example the icon is displayed in the same position as it is displayed in the idle view. This allows a user to more easily associate the function of the icon with the icon as the association will be reinforced by the position. It is also possible to display the smaller icon in a fixed position. This allows a user to more easily find the corresponding smaller icon 610 as he knows in which position to look for it.

A scrollbar 670 is also displayed, indicating that there are more status notifications available. A user can scroll through the various status notifications with a navigation key 630b.

Figure 6B shows the mobile communications terminal 600 displaying a status notification for the signal strength (of the received network signal) In this example only the descriptive title 680 and the status 660 are displayed. In this example the signal strength is at 90 %. This is also indicated by the number of bars in the enlarged icon 650.

Figure 6C shows the mobile communications terminal 600 displaying a status notification for the current alert type. A descriptive title 680 is displayed as well as a status 660. In this example the current alert type is both to ring and to vibrate. The enlarged icon 650 shows this by both showing a note and diagonal bars indicating the vibration. By allowing the user to see an enlarged version of the icon representing the function or status a user will be able to more clearly associate the various versions of the icon with the corresponding functionality. It is difficult to discern these smaller differences if the user is only allowed to see only the smaller icons. If the user has not been made aware of these differences it is very difficult for an inexperienced user to notice them when seeing a smaller icon. In this example all smaller icons 610 are also displayed as in the idle screen. The corresponding smaller icon 610 is highlighted by being marked with a box. As has been discussed above, various highlighting features are available to a designer for highlighting a corresponding smaller icon 610.

Some examples of statuses for various functions and features are listed below along with possible variations of the icons (both smaller and/or enlarged) for indicating the status graphically.

Signal strength: 0 bars → 0 %; 1 bar → 1- 20 %; 2 bars → 21- 40 %; 3 bars → 41- 60 %; 4 bars → 61- 80 %; 5 bars → 81- 100 %.

Battery level: 0-1 bars → 0 - 20 %; 2 bars → 21- 40 %; 3 bars → 41- 60 %; 4 bars → 61-80 %; 5 bars → 81-100 %.

Alert type: Ringtone - a note, the bigger the note, the louder the ringtone; Vibration - sideways bars.

SMS/MMS shows the number of unread messages.

Missed call shows the number of missed calls.

Alarm shall only be shown when there is any alarm actively set, the notification shows the time of the alarm and if it is to be repeated.

Bluetooth®: shall only be shown if Bluetooth® is ON. The status texts and icons are: "Visible", "Not Visible" and "Connected".

Call forward: Shall be shown if active.

Voicemail: shall only be shown if there are any voicemails.

It should be noted that in one embodiment the status notifications in the menu option showing the enlarged icons (referenced 650 in figures 6A-C) may be implemented to always show the status notification even if the corresponding activity is null. For example, if there are no voicemail present, the smaller icon (610) is not displayed, whereas in the status menu option in the notification is displayed with the enlarged icon (650) and a descriptive text (660 and/or 680).

As can be seen in figures 6A-C no other information (apart from the status bar in figure 6C) is displayed. This enables a user to focus on the relevant data and not be distracted by other information. This is of great benefit as many technically inexperienced users are easily bewildered and confused by the amount of data that is presented to them by modem mobile communications terminals.

It should be noted that although the example embodiments herein are described with reference to a non-touch display it should be clear that they can also be implemented on a touch display or a combination of touch display and physical keys.

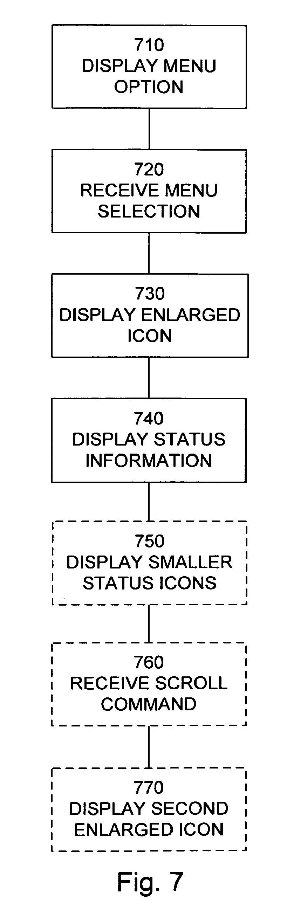

Figure 7 shows a flowchart of a general method according to herein. A mobile communications terminal displays 710 a menu option and receives 720 a user command for selecting a displayed menu option. In response thereto the mobile communications terminal displays 730 an enlarged icon and displays 740 a corresponding status information. To further allow a cognitive link to be formed a smaller icon is also displayed 750. This is optional as is indicated by the dashed line in figure 7.

The mobile communications terminal may further receive 760 a scrolling command and in response thereto display 770 a second enlarged icon.

One benefit is that the manner taught herein takes use of the already existing user interface structure, both with regards to the menu system or hierarchy and the hardware components necessary to implement the user interface, sinceit does not require the use of specially designated keys or that a touch screen is required.

Another benefit is that a user will recognize the general concept of the user interface and the improved status notification will thus not present a mental obstacle that the user needs to adapt to in order to be able to overcome. The user will thus be able to take part of the notifications more easily and intuitively.

One major benefit lies in that as the improved manner taught herein provides the user with a cognitive link, the user will be able to associate the status information and the smaller icon more easily and learn the system more quickly compared to the prior art systems.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A mobile communications terminal (500) comprising a memory (240), a display (120, 220) and a controller (210), wherein said controller (210) is configured to:
display at least one smaller icon (510) for indicating a status;
receive a selection of a status menu option; and in response thereto
display an enlarged icon (550) being an enlarged version of a corresponding smaller icon (510) for enabling a cognitive link between the smaller icon and a related status.

2. The mobile communications terminal (500) according to claim 1, wherein the controller (210) is further configured to display status information (560, 680) at the same time as displaying the enlarged icon (550).

3. The mobile communications terminal (200) according to of claim 1 or 2, wherein the controller (210) is further configured to continue to display at least the corresponding smaller icon (610) while displaying the enlarged icon (650).

4. The mobile communications terminal (200) according to claim 3, wherein the controller (210) is further configured to highlight the corresponding smaller icon (610).

5. The mobile communications terminal (200) according to any of claims 1 to 4, wherein the controller (210) is further configured to receive a scroll command and in response thereto display a second enlarged icon.

6. The mobile communications terminal (200) according to any of claims 1 to 5, further comprising a keypad (130) comprising a selection key (530a, 130a), wherein the selection of a status menu option is received through said selection key (530a, 130a).

7. The mobile communications terminal (200) according to any of claims 1 to 6, wherein the controller (210) is further configured to display only information that is relevant to the status related to the enlarged icon (650).

8. The mobile communications terminal (200) according to any of claims 1 to 6, wherein the controller (210) is further configured to display only a plurality of smaller icons (510) and information that is relevant to the status related to the enlarged icon (650).

9. A method for use in a mobile communications terminal (200) comprising a memory (240) and a display (120, 220), said method comprising:
displaying at least one smaller icon (510) for indicating a status;
receiving a selection of a status menu option; and in response thereto
displaying an enlarged icon (550) being an enlarged version of a corresponding smaller icon (510) for enabling a cognitive link between the smaller icon and a related status.

10. A computer readable storage medium (40) encoded with instructions (41) that, when loaded and executed on a processor, causes the method according to claim 9 to be performed.
